# FASCICULE DE BREVET EUROPEEN

(11) **EP 1 894 770 B1**
(45) Date de publication et mention de la délivrance du brevet: **18.11.2009**
(21) Numéro de dépôt: 07115317.5
(22) Date de dépôt: 30.08.2007
(51) Int. Cl.: B60N 2/28

(54) **Siège auto pour enfant pivotant entre une position d'utilisation et au moins une position d'installation, à crochet à double mode de verrouillage**
Kraftfahrzeugsitz für ein Kind, drehbar zwischen einer Gebrauchsposition und mindestens einer Einstiegsposition, mit einem Haken mit doppeltem Verriegelungsmodus
Automotive seat for a child, pivotable between a use position and at least one access position, having a hook with dual locking mode

(30) Priorité: 01.09.2006 FR 0607696
(43) Date de publication de la demande: 05.03.2008
(73) Titulaire: Dorel France SA, 49309 Cholet Cedex (FR)
(72) Inventeur: Lhomme, Gilles, 85180 Château d'Olonne (FR); Biaud, Richard, 49340 Trementines (FR)
(74) Mandataire: Bioret, Ludovic

(56) Documents cités:
- EP-A- 1 625 967
- EP-A- 1 625 968
- EP-A1- 1 247 688
- WO-A-2005/000627
- US-B1- 6 773 065

## Description

### 1. Domaine de l'invention

Le domaine de l'invention est celui de la puériculture. Plus précisément, l'invention concerne les sièges auto pour enfant destinés à être installés dans un véhicule.

Plus précisément encore, l'invention concerne les sièges auto pour enfant dits pivotants, mobiles de façon à prendre au moins une position d'installation (face à une portière) et une position d'utilisation (face à la route).

### 2. Art antérieur

Dans les sièges auto pour enfant, une des difficultés est l'accessibilité, du fait notamment de l'espace réduit laissé par la portière et le siège du véhicule. Il est généralement peu aisé d'installer l'enfant dans le siège auto pour enfant, ou de l'extraire de celui-ci.

Pour faciliter l'installation de l'enfant, il a donc été proposé de rendre pivotant le siège auto pour enfant par rapport à une embase ou une structure fixe, le siège auto pour enfant étant susceptible d'être déplacé entre :
- au moins une position d'installation de l'enfant, face à une portière latérale (il y a en général deux positions d'installation, le siège auto pour enfant pouvant tourner à gauche ou à droite) ; et
- une position de transport ou de voyage ou d'utilisation, face à la route.

L'invention concerne en particulier ce type de sièges auto pour enfant.

Pour des raisons de sécurité, il est souhaitable que l'embase maintienne le siège auto pour enfant en au moins deux zones, en partie basse (au niveau de l'assise) et en partie haute (au voisinage la partie supérieure du dossier). Pour cela, l'embase présente deux portions sensiblement perpendiculaires, l'une reposant sur l'assise du siège du véhicule, et recevant l'assise du siège auto pour enfant, et une autre s'étendant sensiblement verticalement, le long du dossier du siège du véhicule. Cette dernière partie de l'embase comprend dans sa partie supérieure des moyens de solidarisation avec la partie supérieure du dossier du siège auto pour enfant.

Des solutions de solidarisation du dossier du siège auto pour enfant avec l'embase ont été envisagées. Certaines mettent en oeuvre des systèmes de coulisse prévus en partie supérieure du dossier du siège auto pour enfant et destinés à coopérer avec un crochet solidaire de l'embase qui se verrouille dès que le siège auto pour enfant pivote de la position d'installation à la position d'utilisation.

Une telle technique est par exemple divulguée dans le document de brevet EP-1625968, qui décrit un siège auto pour enfant conforme au préambule de la revendication 1.

Cette double liaison (partie basse et partie haute) renforce bien entendu la sécurité, notamment en cas de choc. Cependant, il peut arriver qu'une mauvaise manipulation du siège auto pour enfant conduise à ce que le système de solidarisation du dossier du siège auto pour enfant avec l'embase ne se verrouille pas ou mal.

En effet, le verrouillage d'un tel système de solidarisation suppose que l'utilisateur fasse pivoter convenablement le siège auto pour enfant vers la position d'utilisation, de façon que le système de coulisse coopère bien avec le crochet de manière à ce que celui-ci se verrouille. Or certains utilisateurs, dans certains cas de mauvaise utilisation, rares mais possibles comme le montrent des tests effectués sur des produits, peuvent forcer sur le dossier de façon à l'éloigner de l'embase, ce qui peut faire que le siège auto pour enfant pivote sans que le système de coulisse et le crochet ne coopèrent de sorte que le siège auto pour enfant arrive en position d'utilisation sans que le système de solidarisation ne se soit verrouillé.

Même si l'utilisateur s'aperçoit de son erreur de manipulation, il ne peut assurer par lui-même le verrouillage, à moins de refaire intégralement la manoeuvre et donc de faire pivoter le siège auto pour enfant en position d'installation puis en position face à la route de façon que le système de solidarisation se verrouille.

Par mégarde ou par négligence, il est donc possible que, dans certains cas rares le siège auto pour enfant soit utilisé sans que le système de solidarisation ne se soit verrouillé.

### 3. Objectifs de l'invention

L'invention a notamment pour objectif de pallier ces inconvénients de l'art antérieur.

Il est important de noter ici que l'identification de ce problème fait partie en soi de l'invention. En effet, le problème de la mauvaise utilisation possible d'un siège auto pivotant pour enfant, et donc de la possibilité que, dans certains cas, l'accrochage puisse ne pas s'effectuer correctement malgré les moyens de guidage en pivotement mis en oeuvre, n'est pas évident pour l'homme du métier, qui considère que la présence de ces moyens de guidage résout le problème de l'accrochage en partie haute. Les inventeurs ont détecté ce problème spécifique et nouveau.

Plus précisément, un objectif de l'invention est de fournir un siège auto pivotant pour enfant, qui présente de bonnes qualités de sécurité, et notamment dont le siège est efficacement et systématiquement maintenu par la partie supérieure de son dossier, quelles que soient les éventuelles mauvaises manipulations.

Un autre objectif de l'invention est de fournir un tel siège auto pivotant pour enfant dont la partie supérieure de son dossier et l'embase se solidarisent quelles que soient les circonstances dans lesquelles il est pivoté et manipulé d'une position d'installation à une position de voyage.

Encore un objectif de l'invention est de proposer un tel siège auto pour enfant dont la partie supérieure du dossier et l'embase puisse être solidarisées après que le siège auto pour enfant est placé en position face à la route.

Un objectif secondaire visé par l'invention est de fournir un tel siège auto pour enfant permettant à son utilisateur de savoir si la partie supérieure du dossier est correctement solidarisée à l'embase en position d'utilisation.

L'invention a encore pour objectif de fournir un tel siège auto pour enfant qui soit relativement peut coûteux à fabriquer, et qui soit fiable dans le temps.

### 4. Exposé de l'invention

Ces objectifs, ainsi que d'autres qui apparaîtront par la suite, sont atteints à l'aide d'un siège auto pour enfant, comportant une embase et une assise pivotant par rapport à ladite embase de façon à prendre au moins deux positions :
- une position d'utilisation, dans laquelle ladite assise est orientée face à la route, et dans laquelle des moyens de verrouillage comprenant un élément de verrouillage solidaire de la partie supérieure du dossier de ladite assise et un élément de verrouillage solidaire de ladite embase sont verrouillés;
- au moins une position d'installation, dans laquelle ladite assise est orientée vers une portière d'un véhicule, et dans laquelle lesdits éléments de verrouillage sont déverrouillés,
un premier desdits éléments de verrouillage comprenant une surface de guidage latérale coopérant avec au moins une pièce mobile du second desdits éléments de verrouillage, lorsque ladite assise passe dans ladite position d'utilisation par un déplacement dudit dossier selon une direction sensiblement parallèle audit dossier, **caractérisé en ce que** ledit premier élément de verrouillage comprend également une surface de guidage frontale coopérant avec au moins une desdites pièce mobile du second desdits éléments de verrouillage, lorsque ladite assise passe dans ladite position d'utilisation par un déplacement dudit dossier selon une direction sensiblement perpendiculaire audit dossier ; lesdites surfaces de guidage étant configurées pour amener lesdits éléments de verrouillage dans une position verrouillée dès que ladite assise se trouve dans ladite position d'utilisation.

Ainsi, la solidarisation de la partie supérieure du dossier du siège auto pour enfant selon l'invention avec l'embase se fait selon deux modes de verrouillage (ou modes de fixation) :
- un premier mode de verrouillage, dit mode normal, dans lequel les éléments de verrouillage du dossier du siège auto pour enfant et de l'embase se solidarisent automatiquement dans la position d'utilisation au cours du passage d'une des positions d'installation à la position d'utilisation;
- un second mode de verrouillage, dit mode dégradé, dans lequel les éléments de verrouillage du dossier du siège auto pour enfant et de l'embase se solidarisent dès que le siège auto pour enfant se trouve dans la position d'utilisation, sous l'effet d'une pression exercée selon une direction sensiblement perpendiculaire au dossier de l'assise du siège auto pour enfant tendant à rapprocher le dossier de l'embase.

La solidarisation de la partie supérieure du dossier du siège auto pour enfant selon l'invention avec l'embase peut donc être correctement effectuée dans la position d'utilisation quelles que soient les circonstances dans lesquelles l'assise du siège auto pour enfant pivote d'une position d'installation à la position d'utilisation.

Cette approche confère donc au siège auto pour enfant selon l'invention de bonnes qualités notamment en terme de sécurité.

D'autres caractéristiques du siège auto pour enfant conforme à l'invention sont définies dans les revendications dépendantes.

Selon une approche préférée de l'invention, ladite assise peut prendre au moins deux positions d'installation, respectivement par rotation vers la gauche et vers la droite par rapport à ladite embase, et en ce que ledit premier élément de verrouillage comprend deux surfaces de guidage latérales coopérant respectivement avec au moins une desdites pièce mobile selon que ladite assise est pivotée depuis l'une ou l'autre desdites positions d'installation.

Le siège auto pour enfant peut ainsi tout aussi bien être placé à droite ou à gauche à l'intérieur de l'habitacle d'un véhicule ce qui lui confère une plus grande modularité.

Avantageusement, ladite ou lesdites pièces mobiles sont associées à des moyens de rappel qui tendent à la ou les ramener dans ladite position verrouillée.

Ainsi, dès que l'assise passe dans la position d'utilisation, la ou lesdites pièces mobiles passent automatiquement en position de verrouillage, de façon que la partie supérieure du dossier de l'assise soit solidarisée avec l'embase.

Selon un aspect avantageux de l'invention, le siège auto pour enfant comprend des moyens de déverrouillage permettant de faire passer ladite ou lesdites pièces mobiles dans ladite position désolidarisée.

Il devient alors aisé de faire pivoter l'assise vers une position d'installation.

Préférentiellement, lesdits moyens de déverrouillage sont commandés de façon déportée par au moins un câble de commande.

Cette approche confère au siège auto pour enfant de bonnes qualités sur le plan ergonomique, et est simple et peu coûteuse à mettre en oeuvre.

Selon une variante de l'invention, le siège auto pour enfant comprend des moyens de contrôle visuel du verrouillage ou déverrouillage desdits moyens de verrouillage.

Un utilisateur peut alors contrôler facilement si la partie supérieure du dossier de l'assise est correctement solidarisée à l'embase. Ceci peut permettre d'éviter que l'utilisateur ne prenne la route alors que le siège auto pour enfant n'est pas verrouillé, et donc d'améliorer la sécurité d'un enfant prenant place dans le siège auto pour enfant.

Selon un mode de réalisation particulier de l'invention, ladite ou lesdites surfaces de guidage latérales forment au moins une glissière débouchant sur au moins un logement de verrouillage.

Les éléments de verrouillage peuvent ainsi être facilement ramenés en position verrouillée lorsque l'assise passe dans la position d'utilisation.

Selon une approche particulière de l'invention, ledit second élément de verrouillage forme un crochet qui comprend au moins deux dents mobiles coopérant avec ledit logement de verrouillage dans ladite position verrouillée.

Selon une autre approche avantageuse de l'invention, ladite pièce mobile est un crochet pivotant autour d'un axe perpendiculaire audit, dont au moins une extrémité coopère avec au moins un desdits logements dans la position verrouillée.

Selon une autre approche préférée de l'invention, ladite pièce mobile est un crochet basculant autour d'un axe horizontal, et coopérant avec une portion dudit premier élément de verrouillage définissant sensiblement un « U », dans ladite position verrouillée.

Ces approches, simples de mise en oeuvre, permettent d'assurer une solidarisation efficace de la partie supérieure du dossier de l'assise avec l'embase lorsque l'assise est en position d'utilisation.

Dans un mode de réalisation avantageux de l'invention, ledit siège auto pour enfant comprend des moyens d'indexation contrôlant un placement correct de ladite assise dans ladite position d'utilisation.

Ceci permet d'assurer le bon positionnement de l'assise dans la position d'utilisation lorsqu'elle est pivotée dans sa direction, et de garantir un bon verrouillage du système de solidarisation de la partie haute du dossier de l'assise avec l'embase.

Préférentiellement, lesdits moyens d'indexation peuvent prendre deux positions, une position dans laquelle ils autorisent un déplacement de ladite assise vers la droite, une position dans laquelle ils autorisent une rotation de ladite assise vers la gauche.

Le siège auto pour enfant peut ainsi tout aussi bien être placé à droite ou à gauche à l'intérieur de l'habitacle d'un véhicule ce qui lui confère une plus grande modularité.

### 5. Liste des figures

D'autres caractéristiques et avantages de l'invention apparaîtront plus clairement à la lecture de la description suivante de modes de réalisation préférentiels, donnés à titre de simples exemples illustratifs et non limitatif, et des dessins annexés, parmi lesquels :
- les figures 1 et 2 illustrent respectivement un siège auto pour enfant selon l'invention placé dans la position d'utilisation et une portion supérieure de siège auto pour enfant dans une position d'installation ;
- les figures 3 à 5 illustrent différentes vues d'un système de solidarisation mis en oeuvre dans un premier mode de réalisation d'un siège auto pour enfant selon l'invention dans lequel un crochet mobile présentant des dents escamotables est solidaire de l'assise du siège auto pour enfant ;
- les figures 6 à 9b illustrent plusieurs vues d'un système de solidarisation mis en oeuvre dans un deuxième mode de réalisation d'un siège auto pour enfant selon l'invention dans lequel un crochet mobile est solidaire de l'embase du siège auto pour enfant ;
- les figures 10 à 12 illustrent trois vues d'un système de verrouillage de la partie haute du dossier d'un siège auto pour enfant mis en oeuvre dans un troisième mode de réalisation d'un siège auto pour enfant selon l'invention
dans lequel l'embase présente une contre-forme formant un guide pour un crochet mobile solidaire de l'assise d'un siège auto pour enfant et permettant de le faire passer d'une position déverrouillée à une position verrouillée ;
- les figures 13a et 13b illustrent un mode de réalisation dans lequel le siège auto pour enfant selon l'invention met en oeuvre des moyens d'indexation de la rotation de l'assise.

### 6. Description de quelques modes de réalisation de l'invention

### 6.1. Rappel du principe de l'invention

L'invention concerne donc un siège auto pour enfant pivotant entre au moins une position d'installation, dans laquelle il est amené face à la porte d'un véhicule pour permettre l'installation ou la désinstallation de l'enfant, et une position d'utilisation, dans laquelle il est face à la route. Ce siège auto pour enfant comprend des éléments de verrouillage permettant la solidarisation de la partie haute de son dossier à l'embase, dans la position d'utilisation.

Selon l'invention, les éléments de verrouillage peuvent se verrouiller selon deux modes de verrouillage. Selon un premier mode de verrouillage, dit mode normal, les éléments de verrouillage se verrouillent (ou se solidarisent) automatiquement dans la position d'utilisation au cours du passage du siège auto pour enfant d'une des positions d'installation à la position d'utilisation (face à la route). Selon un second mode de verrouillage, dit mode dégradé, les éléments de verrouillage se verrouillent automatiquement dès lors que le siège auto pour enfant se trouve dans la position face à la route, sous l'effet d'une pression, due par exemple à l'élasticité du dossier du siège auto pour enfant, exercée sur le dossier du siège auto pour enfant selon une direction sensiblement perpendiculaire au dossier.

Ce second mode de verrouillage a pour avantage de garantir une bonne fixation du siège auto pour enfant, lorsqu'un utilisateur ne respecte pas les conditions normales d'utilisation. Ainsi, on supprime les risques pour l'enfant, même en cas de mauvaise utilisation (« misuse » en anglais).

Ainsi, quelles que soient les circonstances dans lesquelles l'assise du siège auto pour enfant pivote d'une des positions d'installation à la position d'utilisation, les éléments de verrouillage de la partie supérieure du dossier du siège auto pour enfant selon l'invention se solidarisent avec l'embase de façon satisfaisante.

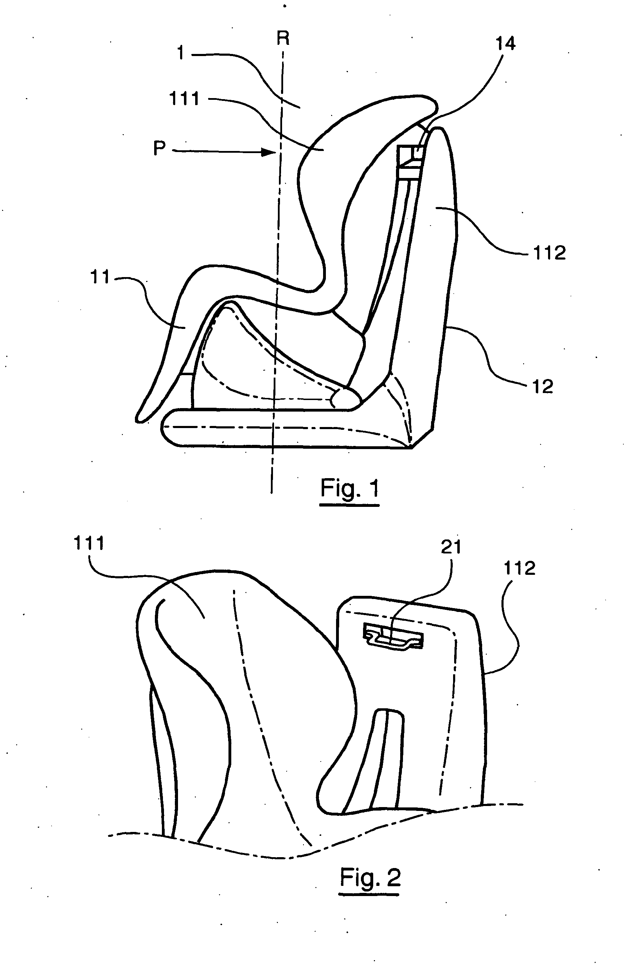

Les figures 1 et 2 illustrent le principe général de l'invention.

Tel qu'illustré sur ces figures, une assise 11 d'un siège auto pivotant pour enfant 1 est montée pivotante sur une embase 12, entre une position face à la route (figure 1) et une position face à la portière d'un véhicule (figure 2). Un premier élément de verrouillage, formé par exemple d'un point d'ancrage fixe 14, est solidaire du dossier 111. Un crochet 21 mobile est solidaire d'une partie verticale 112 de l'embase 12. Ce crochet 21 est mobile entre une position déverrouillée dans laquelle il est éloigné du point d'ancrage 14, et une position verrouillée dans laquelle il coopère avec le point d'ancrage 14.

Dans les différents modes de réalisation présentés plus loin, le crochet peut être indifféremment solidaire de l'assise ou de l'embase et l'ancrage peut être indifféremment solidaire de l'assise ou de l'embase.

Les deux modes de verrouillage discutés plus haut (mode normal et mode dégradé) vont maintenant être illustrés.

Lorsque l'assise 11 du siège auto pour enfant 1 pivote autour d'un axe R, c'est-à-dire selon une direction sensiblement parallèle au dossier 111 de l'assise 11, pour passer d'une position d'installation à la position d'utilisation, le crochet 21 passe dans une position verrouillée dans laquelle il coopère, ou se solidarise, avec le point d'ancrage 14.

En raison d'une mauvaise manipulation, il pourrait arriver que le crochet 21 ne se solidarise pas avec le point d'ancrage 14 au cours du pivotement. Dans ce cas, une pression suivant la flèche P, par exemple due à l'élasticité du dossier 111 de l'assise 11, tend à déplacer légèrement le dossier 111 de l'assise 11 selon une direction sensiblement perpendiculaire au dossier 111, et provoque le passage du crochet 21 en position verrouillée, c'est-à-dire sa solidarisation avec le point d'ancrage 14, quand le siège auto pour enfant est dans la position d'utilisation.

Ainsi, si le crochet 21 et le point d'ancrage 14 ne se solidarisent pas directement au cours du pivotement, l'utilisateur n'aura pas à replacer l'assise du siège auto pour enfant dans une position d'installation et à la refaire pivoter dans la position d'utilisation de façon que le crochet 21 passe en position verrouillée. On reviendra dans la position verrouillée dès que l'utilisateur cessera d'éloigner les deux éléments (par exemple sous l'effet de l'élasticité de ceux-ci).

Une fois en position verrouillé, le crochet 21 prévient toute rotation de l'assise 11 du siège auto pour enfant 1 vers l'avant d'un véhicule qui pourrait survenir suite à un choc produit par exemple au cours d'un accident.

### 6.2. 1^{er} mode de réalisation : pointes de harpon

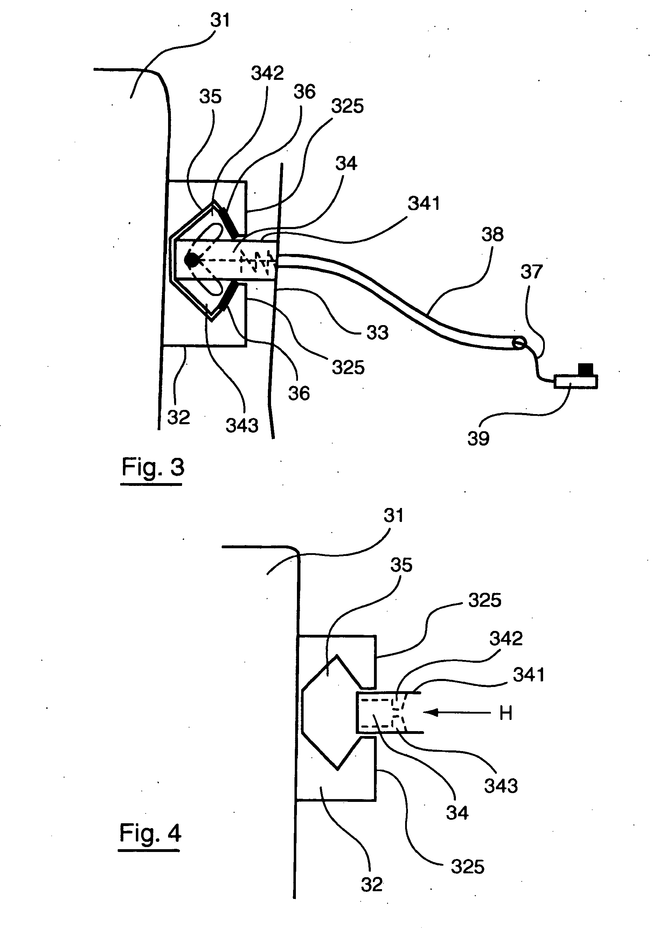

On présente en relation avec les figures 3 à 5 un premier mode de réalisation d'un siège auto pour enfant selon l'invention.

Dans ce mode de réalisation particulier, un premier élément de verrouillage 32 est solidaire de la face tournée vers l'intérieur de l'habitacle d'un véhicule d'une partie d'une embase 31 destinée à venir en appui sur un dossier d'un siège d'un véhicule (non représenté ici). L'élément de verrouillage 32 prend ici la forme d'une glissière présentant quatre surfaces de guidage latérales 321, 322, 323, 324. La section de la glissière 32 se rétrécit depuis chacune de ses extrémités pour déboucher dans une cavité 35 ménagée sensiblement en son centre.

Un deuxième élément de verrouillage prenant ici la forme d'un crochet 34, est solidaire du dossier 33 de l'assise. Le crochet 34 est ici composé d'un arbre métallique 341 de section sensiblement carré, par exemple, sur lequel sont montées deux dents mobiles 342 et 343 entre une position déployée (figure 3) et une position escamotée (figure 4) dans laquelle elles sont dissimulées à l'intérieur de l'arbre 341. L'arbre 341 est soudé sur la structure du dossier 33 de l'assise. D'autres moyens de solidarisation et d'autres matériaux adaptés peuvent bien sûr être utilisés.

Les dents mobiles 342 et 343 sont chacune liées à un moyen de rappel, mettant par exemple en oeuvre un ressort (qui n'apparaît pas sur les figures), tendant à les ramener dans la position déployée.

La glissière 32 est destinée à coopérer et à former un moyen de guidage pour le crochet 34 et à ramener celui-ci dans une position solidarisée quand le siège auto pour enfant est ramené d'une position d'installation à la position d'utilisation.

De manière à renforcer la glissière 32, les parties de la glissières 32 venant en contact avec le crochet 34 sont recouvertes de portées prenant ici la forme de deux plaques métalliques 36. D'autres moyens peuvent être mis en oeuvre dans le but de limiter l'usure engendrée par le frottement du crochet 34 sur la glissière 32.

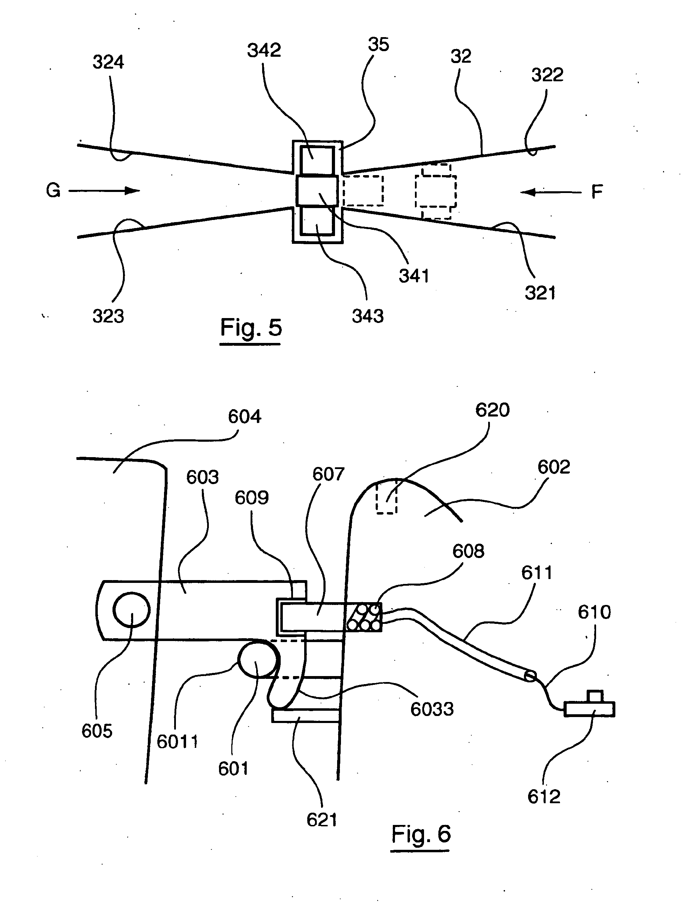

Dans le mode de verrouillage normal, le crochet 34 se solidarise à la glissière quand le siège auto pour enfant pivote d'une position d'installation à la position d'utilisation. Au cours de ce mouvement, le crochet 34 s'engage dans la glissière 32 suivant l'une des flèches F ou G, selon que le siège auto pour enfant est positionné dans la région gauche ou droite de l'habitacle d'un véhicule. Du fait que la section de la glissière 32 se rétrécit, les dents mobiles 342 et 343 passent progressivement de la position déployée à la position escamotée (figure 5), jusqu'à ce que le crochet 34 atteigne la cavité 35, dans laquelle les dents 342 et 343 sont ramenées dans la position déployée sous l'effet de ressorts de compression (figure 3). Le crochet 34 se trouve alors dans une position verrouillée (ou solidarisée) et le siège auto pour enfant est bloqué en position d'utilisation.

Dans le mode de verrouillage dégradé, le crochet 34 se déplace selon la flèche H jusqu'à entrer en contact avec la surface de guidage frontale (ou surface extérieure) 325 de la glissière 32 au niveau de la cavité 35. À mesure que le crochet 34 pénètre la cavité 35, par exemple sous l'effet d'une pression engendrée par l'élasticité du dossier 33 de l'assise, les dents 342 et 343 passent progressivement de la position déployée à la position escamotée jusqu'à ce qu'elles se déploient de nouveau à l'intérieur de la cavité 35 (figure 3). Le crochet 34 est alors dans une position solidarisée dans laquelle les dents 342, 343 sont engagées et déployées dans la cavité 35, et le siège auto pour enfant est bloqué en position d'utilisation.

Pour obtenir le déverrouillage (ou la désolidarisation) du crochet 34, de façon à faire passer le siège auto pour enfant de la position d'utilisation à l'une des positions d'installation, le crochet 34 doit être dégagé de la cavité 35. Cela peut par exemple être obtenu à l'aide d'un système à câble.

Un câble 37, passant dans une gaine 38, est relié à l'une de ses extrémités aux deux dents mobiles 342 et 343. L'autre extrémité du câble 37 est reliée à un ou plusieurs moyens de commande pouvant prendre la forme d'une tirette 39 localisée par exemple au niveau des accoudoirs du siège auto pour enfant.

Lorsque l'on tire sur le câble 37 par l'intermédiaire de la tirette 39, les dents mobiles 342 et 343 passent de la position déployée à la position escamotée dans laquelle elles sont dissimulées à l'intérieur de l'arbre 341. Le crochet 34 est ainsi placé en position déverrouillée de sorte que le siège auto pour enfant peut être pivoté.

### 6.3. 2^{e} mode de réalisation : crochet embase

### 6.3.1. Système crochet embase

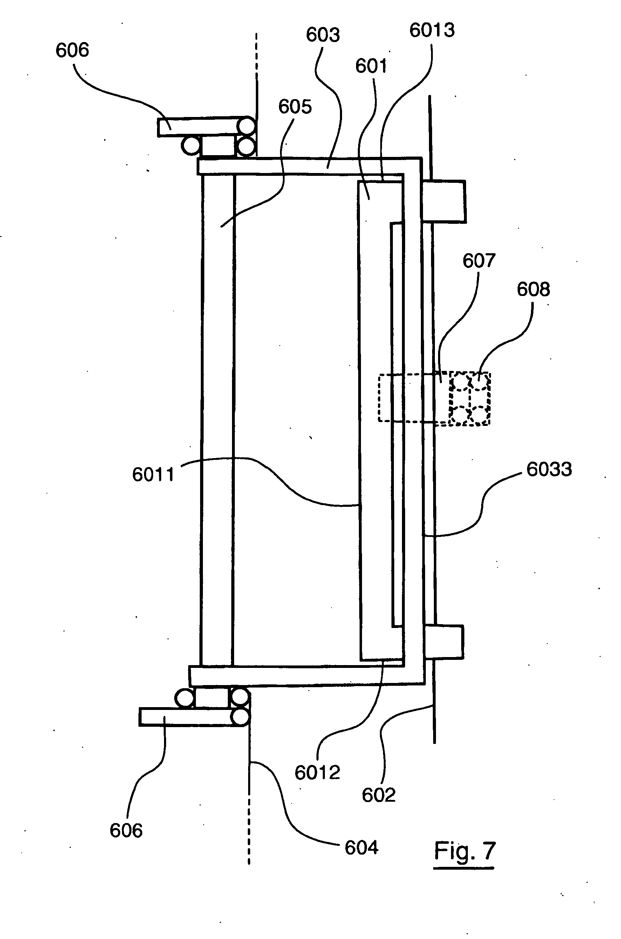

En référence aux figures 6 à 9b, on présente un deuxième mode de réalisation d'un siège auto pour enfant selon l'invention.

Dans ce mode de réalisation particulier, un premier élément de verrouillage 601 est solidaire du dossier 602 de l'assise d'un siège auto pour enfant. Le premier élément de verrouillage 601 prend ici la forme d'un fil sensiblement en forme de « U » présentant une surface de guidage de front 6011 et deux surfaces de guidage de côté 6012, 6013.

Un deuxième élément de verrouillage, prenant ici la forme d'un crochet 603, est solidarisé à la face tournée vers l'intérieur de l'habitacle d'un véhicule d'une partie d'une embase 604 destinée à venir en appui sur un dossier (non représenté ici) d'un siège du véhicule. Le crochet 603 est monté libre en rotation sur un axe 605. Des moyens de rappel, qui mettent ici en oeuvre deux ressorts de torsion 606 placés à chaque extrémité de l'axe 605, tendent à ramener le crochet 603 dans la position solidarisée. Le crochet 603 présente deux pentes 6031 et 6032 destinées à coopérer avec le fil 601 lorsque le siège auto pour enfant pivote.

Un pion de verrouillage 607 est solidaire du dossier 602 et lié à un moyen de rappel, prenant ici la forme d'un ressort de compression 608, qui tend à le maintenir dans une position verrouillée dans laquelle il dépasse du dossier 602. Le pion 607 est destiné à coopérer avec un alésage 609 opérée dans le crochet 603 de manière à le maintenir en position verrouillée quand le siège auto pour enfant est en position d'utilisation.

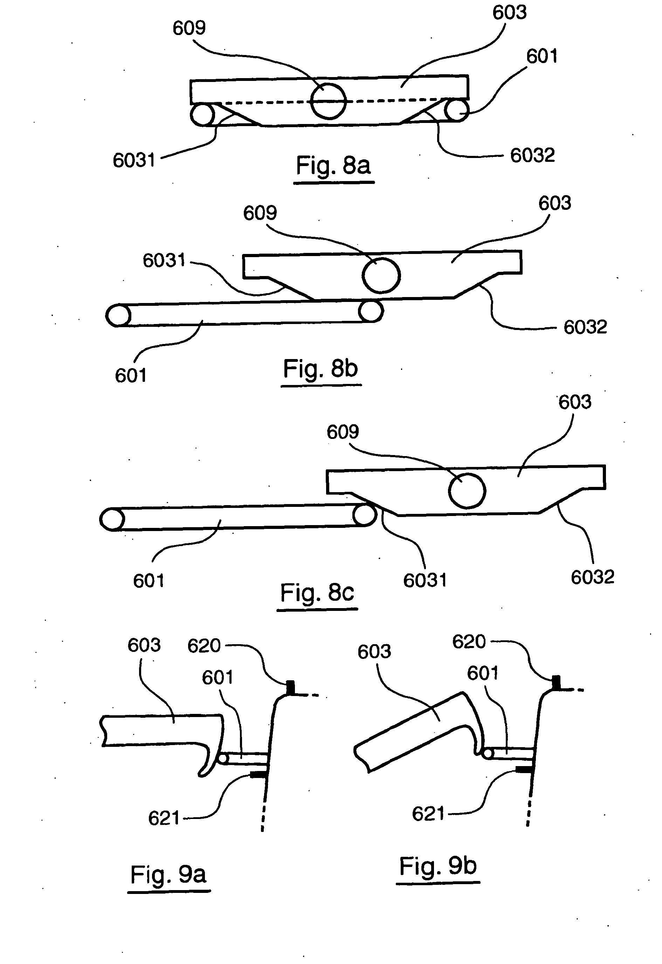

Dans le mode de verrouillage normal, une des pentes 6031, 6032 du crochet 603 entre en contact avec le fil 601 (figure 8c), et le pion 607 entre en contact avec la face 6033 du crochet 603. Le crochet 603 passe progressivement dans une position déverrouillée intermédiaire dans laquelle il chevauche le fil 601 (figure 8b), et le ressort de compression 608 se comprime de sorte que le pion 607 s'escamote progressivement de façon à être en partie dissimulé à l'intérieur du dossier 602. Quand le siège auto pour enfant arrive en position d'utilisation, le crochet 603 passe dans la position verrouillée dans laquelle il est engagée dans le fil 601 (figure 8a), et le pion 607 passe dans une position verrouillée dans laquelle il coopère avec l'alésage 609. Le siège auto pour enfant est ainsi verrouillé dans la position d'utilisation et ne peut donc pas pivoter.

Dans le mode de verrouillage dégradé, la face 6033 du crochet 603 entre en contact avec le fil 601. Le pion 607 entre également en contact avec la face 6033 du crochet 603. La face 6033 du crochet présentant une forme définissant sensiblement un arc de cercle, le crochet 603 passe progressivement dans une position intermédiaire désolidarisée (figure 9b). Dans le même temps, le pion 607 s'escamote progressivement de façon à être dissimulé à l'intérieur du dossier 602. Lorsque le siège auto pour enfant arrive en position d'utilisation, le crochet 603 se trouve dans la position verrouillée et le pion 607 coopère avec l'alésage 609. Le siège auto pour enfant est ainsi bloqué dans la position d'utilisation et ne peut donc pas pivoter.

Pour obtenir le déverrouillage du crochet 603, de façon à faire passer le siège auto pour enfant de la position d'utilisation à l'une des positions d'installation, le crochet 603 doit être libéré en dégageant le pion 607 de l'alésage 609, puis doit être dégagé du fil 601. Cela peut par exemple être obtenu à l'aide d'un système à câble.

Un câble 610, passant dans une gaine 611, est relié à l'une de ses extrémités au pion 607. L'autre extrémité du câble 610 est reliée à un ou plusieurs moyens de commande pouvant prendre la forme d'une tirette 612 localisée par exemple au niveau des accoudoirs du siège auto pour enfant.

Lorsque l'on tire sur le câble 610 par l'intermédiaire de la tirette 612, le pion 607 passe d'une position verrouillée dans laquelle il coopère avec l'alésage 609 du crochet 603 à une position non verrouillée dans laquelle il ne coopère plus avec l'alésage 609 et libère de ce fait le crochet 603. Le siège auto pour enfant peut alors être librement pivoté.

Au cours du passage du siège auto pour enfant de la position face à la route à l'une des positions d'installation, l'une des pentes 6031, 6032 entre en contact avec le fil 601. Le crochet 603 passe progressivement dans une position intermédiaire déverrouillée dans laquelle une des pentes 6031, 6032 chevauche le fil 601. Lorsque le siège auto pour enfant se trouve dans l'une des positions d'installation, le crochet 603 est en position déverrouillée.

### 6.3.2. Indicateur de bon accrochage

Dans ce deuxième mode de réalisation particulier, on prévoit qu'un siège auto pour enfant selon l'invention comprend un indicateur de bon accrochage permettant à l'utilisateur, c'est-à-dire à la personne qui manipule le siège auto pour enfant, de s'assurer que le siège auto pour enfant est bloqué en position d'utilisation et donc que les éléments de verrouillage permettant la solidarisation de la partie haute du dossier de l'assise du siège auto pour enfant avec son embase sont convenablement solidarisés.

Un capot 620 est mobile entre une position déployée dans laquelle il est visible par l'utilisateur et une position escamotée dans laquelle il est dissimulé à l'intérieur de l'embase du siège auto pour enfant et n'est donc pas visible. Le capot 620 est associé à un pêne de prise d'information 621 débouchant de l'embase. Un moyen de rappel, mettant par exemple en oeuvre un ressort de compression (n'apparaissant pas sur les figures), tend à ramener le capot 620 dans sa position déployée.

Lorsque le siège auto pour enfant pivote d'une position d'installation à la position d'utilisation, le crochet 603 se solidarise au fil 601 et entre en contact avec le pêne 621. Le crochet 603 s'oppose à la force de compression imprimée par le ressort au capot 620 de sorte que celui-ci passe de sa position déployée à sa position escamotée et devient non visible par l'utilisateur du siège auto pour enfant (figure 6).

Le capot 620 peut par exemple présenter une couleur particulière ou comporter un message informant l'utilisateur du siège auto pour enfant sur l'état de solidarisation du système de solidarisation.

Lorsque le siège auto pour enfant pivote de la position d'utilisation à une position d'installation, le crochet 603 se désolidarise et libère le pêne 621 de façon que, sous l'effet du ressort de compression, le capot 620 passe dans une position déployée dans laquelle il est visible par l'utilisateur du siège auto pour enfant (figure 9a et 9b).

L'utilisateur est ainsi en mesure d'apprécier si le crochet est en position verrouillée et donc si le siège auto pour enfant est verrouillé en position d'utilisation.

### 6.4. 3^{e} mode de réalisation : crochet bascule

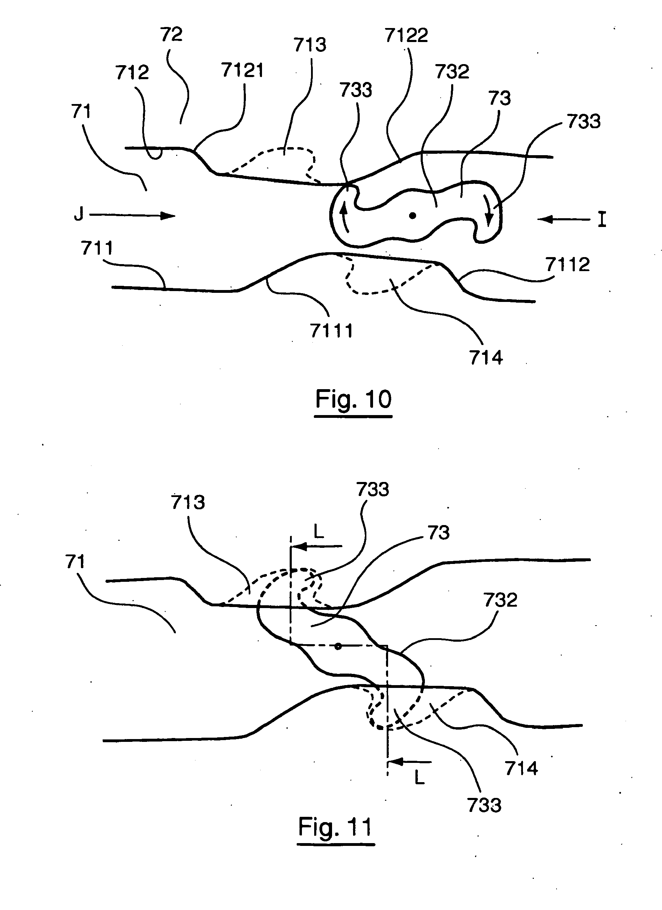

En relation avec les figures 10 à 12, on présente un troisième mode de réalisation d'un siège auto pour enfant selon l'invention.

Dans ce mode de réalisation particulier, un élément de verrouillage formé d'un crochet 73 est solidaire du dossier 74 d'une assise d'un siège auto pour enfant. Le crochet 73 est ici composé d'une partie formant un arbre 731, d'une partie sensiblement plate 732 présentant à chacune de ses extrémités un doigt 733 destiné à coopérer avec un autre élément de verrouillage formant un point d'ancrage 71 solidaire d'une embase 72 de siège auto pour enfant. Le crochet 73 est monté pivotant par rapport à l'assise du siège auto pour enfant de façon qu'il peut passer d'une position verrouillée à une position déverrouillée. Un moyen de rappel, ici constitué d'un ressort de torsion 75, tend à ramener le crochet 73 en position verrouillée.

Le point d'ancrage 71 est solidaire de la face tournée vers l'intérieur de l'habitacle d'un véhicule d'une partie d'une embase 72 destinée à venir en appui sur un dossier d'un siège du véhicule (non représenté ici). Le point d'ancrage 71 prend ici la forme d'une contre-forme réalisée dans l'embase 72. Cette contre-forme 71 présente deux surfaces de contact opposées 711 et 712 comportant notamment des rampes 7111, 7112, 7121, 7122, et destinées à guider et/ou ramener le crochet 73 dans une position verrouillée lorsque le siège auto pour enfant pivote d'une position d'installation à la position d'utilisation. Cette contre-forme 71 présente en outre deux cavités 713 et 714 formant chacune un logement destiné à recevoir un doigt 733 lorsque le siège auto pour enfant est bloqué dans la position d'utilisation. La contre-forme 71 présente également deux surfaces d'appuis inclinées 715 et 716 destinées à ramener le crochet 73 dans une position verrouillée lorsque le siège auto pour enfant est en position face à la route et que le crochet 73 passe en position solidarisée selon le mode dégradé.

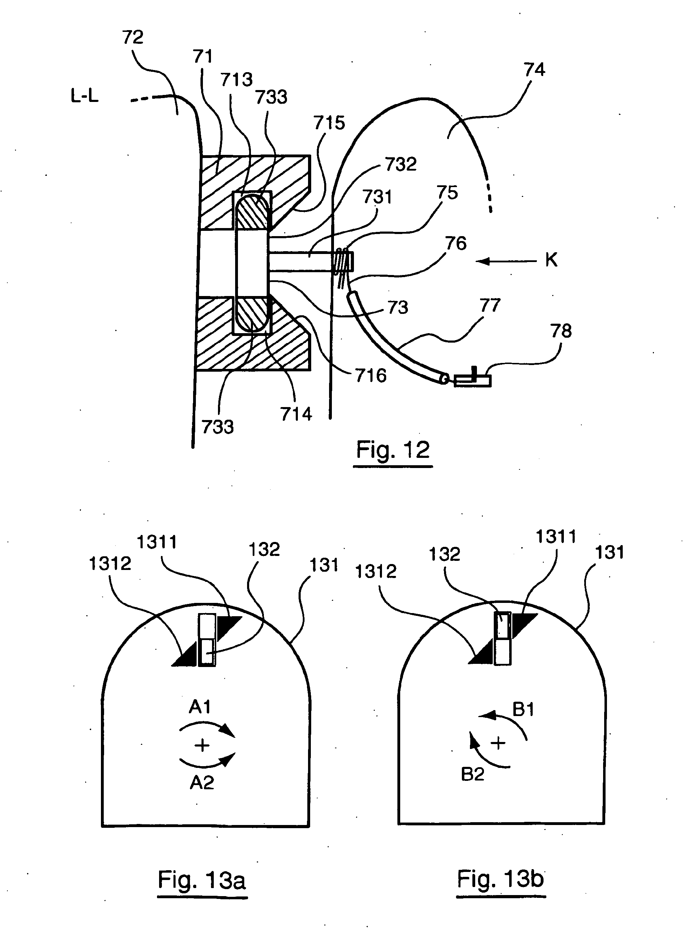

Dans le mode de verrouillage normal, le crochet 73 passe en position verrouillée quand le siège auto pour enfant pivote d'une position d'installation à une position face à la route suivant l'une des flèches 1 ou J (suivant que le siège auto pour enfant est placé dans la région droite ou gauche d'un habitacle). Au cours de ce mouvement, chaque doigt 733 du crochet 73 glisse le long des portées 711, 712 de la contre-forme 71. De part la géométrie que présentent les portées 711 et 712, et notamment de part la présence des rampes 7111, 7112, 7121, 7122, le crochet 73 passe alors progressivement dans une position intermédiaire déverrouillée (figure 10). Lorsque le siège auto pour enfant se trouve dans la position d'utilisation, le crochet 73 passe dans une position verrouillée dans laquelle chacun de ses doigts 733 coopère avec une des cavités 713, 714 (figures 11, 12). Le siège auto pour enfant ne peut plus pivoter et est donc bloqué dans la position d'utilisation.

Dans le mode de verrouillage dégradé, le crochet 73 passe en position solidarisée quand le dossier du siège auto pour enfant se déplace suivant la flèche K (figure 12). Au cours de ce mouvement, chaque doigt 733 glisse sur les surfaces d'appuis inclinées 715 et 716 de la contre-forme 71. Le crochet 73 passe ainsi progressivement dans une position intermédiaire déverrouillée, jusqu'à ce qu'il passe dans la position verrouillée dans laquelle les doigts 733 coopèrent avec les cavités 713 et 714. Le siège auto pour enfant est alors bloqué dans la position d'utilisation et ne peut plus pivoter.

Pour obtenir le déverrouillage du crochet 73, de façon à faire passer le siège auto pour enfant de la position d'utilisation à l'une des positions d'installation, le crochet 73 doit être libéré en dégageant les doigts 733 des cavités 713 et 714. Cela peut par exemple être obtenu à l'aide d'un système à câble.

Un câble 76, passant dans une gaine 77, est relié à l'une de ses extrémités à l'arbre 731. L'autre extrémité du câble 76 est reliée à un ou plusieurs moyens de commande pouvant prendre la forme d'une tirette 78 localisée par exemple au niveau des accoudoirs du siège auto pour enfant.

Lorsque l'on tire sur le câble 76 par l'intermédiaire de la tirette 78, le crochet 73 passe de la position verrouillée dans laquelle les doigts 733 coopèrent avec les cavités 713 et 714 de la contre-forme 71 à la position déverrouillée dans laquelle les doigts 733 ne coopèrent plus avec les cavités 713 et 714. Le siège auto pour enfant peut alors être pivoté librement de la position d'utilisation à l'une des positions d'installation.

### 6.5. Autres caractéristiques

Dans une variante des différents modes de réalisation décrits précédemment, on prévoit que le siège auto pour enfant selon l'invention comprend des moyens d'indexation, contrôlant la rotation de l'assise et formant butée, de façon à garantir le bon positionnement de l'assise dans la position d'utilisation lorsqu'elle est pivotée dans sa direction.

Un premier mode de réalisation de ces moyens de limitation peut être celui décrit dans le brevet portant le numéro EP-1625967 du même déposant.

Un autre mode de réalisation peut être celui illustré aux figure 13a et 13b, dans lequel l'assise pivotante 131 présente deux butées 131 et 1312 sur sa partie inférieure. Une butée mobile 132, solidaire de l'embase (non représentée), est destinée à coopérer avec la butée 1311 ou la butée 1312 dans la position utilisation, de façon à garantir que l'assise 131 soit bien positionnée dans là position utilisation, et que le système de solidarisation de la partie supérieur du dossier de l'assise 131 et de l'embase se verrouille correctement.

La butée mobile 132 peut prendre deux positions selon que le siège auto pour enfant est placé à gauche ou à droite dans l'habitacle du véhicule.

Lorsque le siège auto pour enfant est placé à gauche dans le véhicule, la butée mobile 132 est placée dans la position illustrée à la figure 13a. L'assise 131 peut alors être pivotée selon la flèche A1 jusqu'à ce qu'elle arrive dans la position d'utilisation dans laquelle la butée mobile 132 coopère avec la butée 1312 de façon que l'assise 131 soit bien positionnée dans la position d'utilisation et que le système de solidarisation se verrouille correctement. L'assise 131 peut être ramenée en position d'installation par pivotement selon la flèche A2.

Lorsque le siège auto pour enfant est placé à droite dans le véhicule, la butée mobile 132 est placée dans la position illustrée à la figure 13b. L'assise 131 peut alors être pivotée selon la flèche B1 jusqu'à ce qu'elle arrive dans la position d'utilisation dans laquelle la butée mobile 132 coopère avec la butée 1311 de façon que l'assise 131 soit bien positionnée dans la position d'utilisation et que le système de solidarisation se verrouille correctement. L'assise 131 peut être ramenée en position d'installation par pivotement selon la flèche B2.

La face inclinée des butées 1311, 1312 permet de ramener automatiquement la butée mobile 132 dans la bonne position (figure 9a ou 9b) si un utilisateur ne la positionne pas correctement par mauvaise utilisation (« misuse »).

Les différentes pièces constitutives des systèmes de solidarisation mis en oeuvre dans les différents modes de réalisation d'un siège auto pour enfant selon l'invention, en particulier le crochet et le point d'ancrage, sont réalisés dans des matériaux présentant des caractéristiques mécaniques suffisantes de manière à résister aux efforts pouvant résulter d'un choc occasionné par exemple au cours d'un accident. Les fils et les crochets peuvent être réalisés en matériau métallique par exemple. Les points d'ancrage mis en oeuvre dans le premier et troisième mode de réalisation peuvent par exemple être réalisés dans des matériaux plastiques.

## Revendications

1. Siège auto pour enfant, comportant une embase (12, 31, 604, 72) et une assise (11) pivotant par rapport à ladite embase (12, 31, 604, 72) de façon à prendre au moins deux positions :
- une position d'utilisation, dans laquelle ladite assise (11) est orientée face à la route, et dans laquelle des moyens de verrouillage comprenant un élément de verrouillage (14, 34, 601, 73) solidaire de la partie supérieure du dossier (111, 33, 602, 74) de ladite assise (11) et un élément de verrouillage (21, 32, 603, 71) solidaire de ladite embase (12, 31, 604, 72) sont verrouillés;
- au moins une position d'installation, dans laquelle ladite assise (11) est orientée vers une portière d'un véhicule, et dans laquelle lesdits éléments de verrouillage sont déverrouillés,
un premier (32, 601, 71) desdits éléments de verrouillage comprenant une surface de guidage latérale (321, 322, 323, 324, 6012, 6013, 711, 712) coopérant avec au moins une pièce mobile (342, 343, 603, 73) du second desdits éléments de verrouillage, lorsque ladite assise (11) passe dans ladite position d'utilisation par un déplacement dudit dossier (111, 33, 602, 74) selon une direction sensiblement parallèle audit dossier (111, 33, 602, 74) ;
**caractérisé en ce que** ledit premier élément de verrouillage (32, 601, 71) comprend également une surface de guidage frontale (325, 6011, 715, 716) coopérant avec au moins une desdites pièce mobile (342, 343, 603, 73) du second desdits éléments de verrouillage, lorsque ladite assise (11) passe dans ladite position d'utilisation par un déplacement dudit dossier (111, 33, 602, 74) selon une direction sensiblement perpendiculaire audit dossier (111, 33, 602, 74) ;
lesdites surfaces de guidage étant configurées pour amener lesdits éléments de verrouillage dans une position verrouillée dès que ladite assise (11) se trouve dans ladite position d'utilisation.

2. Siège auto pour enfant selon la revendication 1, **caractérisé en ce que** ladite assise (11) peut prendre au moins deux positions d'installation, respectivement par rotation vers la gauche et vers la droite par rapport à ladite embase (12, 31, 604, 72), et **en ce que** ledit premier élément de verrouillage comprend deux surfaces de guidage latérales (321, 322, 323, 324, 6012, 6013, 711, 712) coopérant respectivement avec au moins une desdites pièce mobile (342, 343, 603, 73) selon que ladite assise (11) est pivotée depuis l'une ou l'autre desdites positions d'installation.

3. Siège auto pour enfant selon l'une quelconque des revendications 1 et 2, **caractérisé en ce que** ladite ou lesdites pièces mobiles (342, 343, 603, 73) sont associées à des moyens de rappel (606, 75) qui tendent à la ou les ramener dans ladite position verrouillée.

4. Siège auto pour enfant selon l'une quelconque des revendications 1 à 3, **caractérisé en ce qu'**il comprend des moyens de déverrouillage permettant de faire passer ladite ou lesdites pièces mobiles (342, 343, 603, 73) dans ladite position désolidarisée.

5. Siège auto pour enfant selon la revendication 4, **caractérisé en ce que** lesdits moyens de déverrouillage sont commandés de façon déportée par au moins un câble de commande (37, 610, 76).

6. Siège auto pour enfant selon l'une quelconque des revendications 1 à 5, **caractérisé en ce qu'**il comprend des moyens de contrôle visuel du verrouillage ou déverrouillage (620) desdits moyens de verrouillage.

7. Siège auto pour enfant selon l'une quelconque des revendications 1 à 6, **caractérisé en ce que** ladite ou lesdites surfaces de guidage latérales (321, 322, 323, 324, 711, 712) forment au moins une glissière (32, 71) débouchant sur au moins un logement de verrouillage (35, 713, 714).

8. Siège auto pour enfant selon la revendication 7, **caractérisé en ce que** ledit second élément de verrouillage forme un crochet (34) qui comprend au moins deux dents mobiles (342, 343) coopérant avec ledit logement de verrouillage (35) dans ladite position verrouillée.

9. Siège auto pour enfant selon la revendication 7, **caractérisé en ce que** ladite pièce mobile est un crochet (73) pivotant autour d'un axe perpendiculaire audit dossier (111, 33, 602, 74), dont au moins une extrémité (733) coopère avec au moins un desdits logements (713, 714) dans la position verrouillée.

10. Siège auto pour enfant selon l'une quelconque des revendications 1 à 6, **caractérisé en ce que** ladite pièce mobile est un crochet (603) basculant autour d'un axe horizontal (605), et coopérant avec une portion dudit premier élément de verrouillage (601) définissant sensiblement un « U », dans ladite position verrouillée.

11. Siège auto pour enfant selon l'une quelconque des revendications 1 à 10, **caractérisé en ce qu'**il comprend des moyens d'indexation (132, 1311, 1312), contrôlant un placement correct de ladite assise (11) dans ladite position d'utilisation.

12. Siège auto pour enfant selon la revendication 11, **caractérisé en ce que** lesdits moyens d'indexation comprennent au moins un élément mobile (132) pouvant prendre au moins deux positions, une position dans laquelle ils autorisent un déplacement de ladite assise (11) vers la droite, une position dans laquelle ils autorisent une rotation de ladite assise (11) vers la gauche.

## Claims

1. Child's car seat, comprising a base (12, 31, 604, 72) and a seat (11) which pivots relative to the said base (12, 31, 604, 72) such as to assume at least two positions:
- a position of use, in which the said seat (11) is oriented facing the road, and in which locking means comprising a locking element (14, 34, 601, 73) which is integral with the upper part of the back (111, 33, 602, 74) of the said seat (11) and a locking element (21, 32, 603, 71) which is integral with the said base (12, 31, 604, 72) are locked;
- at least one installation position, in which the said seat (11) is oriented towards a door of a vehicle, and wherein the said locking elements are unlocked,
a first one (32, 601, 71) of the said locking elements comprising a lateral guide surface (321, 322, 323, 324, 6012, 6013, 711, 712) which co-operates with at least one mobile part (342, 343, 603, 73) of the second one of the said locking elements, when the said seat (11) goes into the said position of use by means of displacement of the said back (111, 33, 602, 74) according to a direction which is substantially parallel to the said back (111, 33, 602, 74); **characterised in that** the said first locking element (32, 601, 71) also comprises a front guide surface (325, 6011, 715, 716) which co-operates with at least one of the said mobile parts (342, 343, 603, 73) of the second one of the said locking elements, when the said seat (11) goes into the said position of use, by means of displacement of the said back (111, 33, 602, 74) according to a direction which is substantially perpendicular to the said back (111, 33, 602, 74); the said guide surfaces being configured in order to bring the said locking elements into a locked position as soon as the said seat (11) is in the said position of use.

2. Child's car seat according to claim 1, **characterised in that** the said seat (11) can assume at least two positions of use, by rotation respectively towards the left and towards the right relative to the said base (12, 31, 604, 72), and **in that** the said first locking element comprises two lateral guide surfaces (321, 322, 323, 324, 6012, 6013, 711, 712) which co-operate respectively with at least one of the said mobile parts (342, 343, 603, 73), according to whether the said seat (11) is pivoted from one or the other of the said installation positions.

3. Child's car seat according to either of claims 1 and 2, **characterised in that** the said mobile part(s) (342, 343, 603, 73) is/are associated with return means (606, 75), which tend to return it/them to the said locked position.

4. Child's car seat according to any one of claims 1 to 3, **characterised in that** it comprises unlocking means which make it possible to make the said mobile part(s) (342, 343, 603, 73) go into the said released position.

5. Child's car seat according to claim 4, **characterised in that** the said unlocking means are controlled in a remote manner by at least one control cable (37, 610, 76).

6. Child's car seat according to any one of claims 1 to 5, **characterised in that** it comprises means for visual checking of the locking or unlocking (620) of the said locking means.

7. Child's car seat according to any one of claims 1 to 6, **characterised in that** the said lateral guide surface(s) (321, 322, 323, 324, 711, 712) form(s) at least one slide (32, 71) which opens into at least one locking receptacle (35, 713, 714).

8. Child's car seat according to claim 7, **characterised in that** the said second locking element forms a hook (34) which comprises at least two mobile teeth (342, 343) which co-operate with the said locking receptacle (35) in the said locked position.

9. Child's car seat according to claim 7, **characterised in that** the said mobile part is a hook (73) which pivots around an axis perpendicular to the said back (111, 33, 602, 74), at least one end (733) of which co-operates with at least one of the said receptacles (713, 714) in the locked position.

10. Child's car seat according to any one of claims 1 to 6, **characterised in that** the said mobile part is a hook (603) which pivots around a horizontal shaft (605), and co-operates with a portion of the said first locking element (601), which substantially defines a "U", in the said locked position.

11. Child's car seat according to any one of claims 1 to 10, **characterised in that** it comprises indexing means (132, 1311, 1312) which control correct positioning of the said seat (11) in the said position of use.

12. Child's car seat according to claim 11, **characterised in that** the said indexing means comprise at least one mobile element (132) which can assume at least two positions, i.e. a position in which they permit displacement of the said seat (11) towards the right, and a position in which they permit rotation of the said seat (11) towards the left.

## Patentansprüche

1. Autokindersitz, der ein Grundteil (12, 31, 604, 72) und ein gegenüber dem besagten Grundteil (12, 31, 604, 72) schwenkbares Sitzteil (11) aufweist, um mindestens zwei Positionen einzunehmen:
- eine Nutzungsposition, bei welcher das besagte Sitzteil (11) zur Straße bzw. in die Fahrtrichtung gewandt ist und bei welcher Verriegelungsmittel, die ein mit dem oberen Teil der Rücklehne (111 ,33, 602, 74) des besagten Sitzteils (11) verbundenes Verriegelungselement (14, 34, 601, 73) sowie ein mit dem besagten Grundteil (12, 31, 604, 72) verbundenes Verriegelungselement (21, 32, 603, 71) aufweisen, verriegelt sind;
- mindestens eine Installationsposition, bei der das besagte Sitzteil (11) zu einer Fahrzeugtür hin gewendet ist und bei der die besagten Verriegelungselemente entriegelt sind,
wobei ein erstes dieser besagten Verriegelungselemente (32, 601,71) eine seitliche Führungsfläche (321, 322, 323, 324, 6012, 6013, 711, 712) aufweist, die mit mindestens einem beweglichen Teil (342,343, 603, 73) des zweiten der besagten Verriegelungselemente zusammenwirkt, wenn das besagte Sitzteil (11) durch Verschiebung der Rücklehne (111, 33, 602, 74) nach einer zur besagten Rücklehne (111, 33, 602, 74) in etwa parallel verlaufenden Richtung in die besagte Nutzungsposition übergeht,
**dadurch gekennzeichnet, dass** das besagte erste Verriegelungselement (32, 601, 71) ebenfalls eine frontale Führungsfläche (325, 6011, 715, 716) umfasst, die mindestens mit einem der besagten beweglichen Teile (342, 343, 603, 73) des besagten zweiten Verriegelungselementes zusammenwirkt, wenn das besagte Sitzteil (11) in die besagte Nutzungsposition durch Verschiebung der besagten Rücklehne (111, 33, 602, 74) nach einer zur besagten Rücklehne (111, 33, 602, 74) in etwa senkrecht verlaufenden Richtung übergeht,
wobei die besagten Führungsflächen so konfiguriert sind, dass sie die besagten Verriegelungselemente in eine verriegelte Position bringen, sobald sich das besagte Sitzteil (11) in der Nutzungsposition sich befindet.

2. Autokindersitz nach Anspruch 1, **dadurch gekennzeichnet, dass** das besagte Sitzteil (11) mindestens zwei Installationspositionen einnehmen kann, jeweils durch Drehung nach links bzw. nach rechts im Verhältnis zum besagten Grundteil (12, 31, 604, 72) und **dadurch**, dass das besagte erste Verriegelungselement zwei seitliche Führungsflächen (321, 322, 323, 324, 6012, 6013, 711, 712) aufweist, die jeweils mit mindestens einem der besagten beweglichen Teile (342, 343, 603, 73) zusammenwirken, je nachdem ob das besagte Sitzteil (11) aus der einen oder der anderen der besagten Installationspositionen heraus geschwenkt wird.

3. Autokindersitz nach einem der Ansprüche 1 oder 2, **dadurch gekennzeichnet, dass** das besagte bewegliche Teil bzw. die besagten beweglichen Teile (342, 343, 603, 73) mit Rückholmitteln (606, 75) assoziiert sind, welche bestrebt sind, sie in die besagte verriegelte Position zurückzuführen.

4. Autokindersitz nach einem der Ansprüche 1 bis 3, **dadurch gekennzeichnet, dass** er über Entriegelungsmittel verfügt, die es ermöglichen, das bewegliche Teil bzw. die beweglichen Teile (342, 343, 603, 73) in die besagte entkoppelte Position übergehen zu lassen.

5. Autokindersitz nach Anspruch 4, **dadurch gekennzeichnet, dass** die besagten Entriegelungsmittel durch mindestens ein Steuerseil (37, 610, 76) in versetzter Weise gesteuert werden.

6. Autokindersitz nach einem der Ansprüche 1 bis 5, **dadurch gekennzeichnet, dass** er über visuelle Kontrollmittel der Verriegelung bzw. Entriegelung (620) der besagten Verriegelungsmittel verfügt.

7. Autokindersitz nach einem der Ansprüche 1 bis 6, **dadurch gekennzeichnet, dass** die besagte seitliche Führungsfläche bzw. die besagten seitlichen Führungsflächen (321, 322, 323, 324, 711, 712) mindestens eine Gleitschiene (32, 71) bildet, die in mindestens einer Verriegelungsaufnahme (35, 713, 714) mündet.

8. Autokindersitz nach Anspruch 7, **dadurch gekennzeichnet, dass** das besagte zweite Verriegelungselement einen Haken (34) bildet, der mindestens zwei bewegliche Zähne (342, 343) aufweist, welche mit der besagten Verriegelungsaufnahme (35) in der besagten verriegelten Position zusammenwirken.

9. Autokindersitz nach Anspruch 7, **dadurch gekennzeichnet, dass** das besagte bewegliche Teil ein Haken (73) ist, der sich um eine Achse dreht, die senkrecht zur besagten Rücklehne (111, 33, 602, 74) steht und von der mindestens ein Ende (733) mit mindestens einer der besagten Aufnahmen (713, 714) in der verriegelten Position zusammenwirkt.

10. Autokindersitz nach einem der Ansprüche 1 bis 6, **dadurch gekennzeichnet, dass** das besagte bewegliche Teil ein Haken (603) ist, der sich um eine horizontale Achse (605) kippen lässt und mit einem Teil des besagten ersten Verriegelungselementes (601) zusammenwirkt, welches in etwa ein "U" in der besagten Verriegelungsposition bildet.

11. Autokindersitz nach einem der Ansprüche 1 bis 10, **dadurch gekennzeichnet, dass** er Indexierungsmittel (132, 1311, 1312) aufweist, welche die ordnungsgemäße Stellung des besagten Sitzteils (11) in der besagten Nutzungsposition sicherstellen.

12. Autokindersitz nach Anspruch 11, **dadurch gekennzeichnet, dass** die besagten Indexierungsmittel mindestens ein bewegliches Teil (132) aufweisen, das mindestens zwei Positionen einnehmen kann, eine Position, in der sie das Drehen des besagten Sitzteils (11) nach rechts und eine Position, in der sie das Drehen des besagten Sitzteils (11) nach links zulässt.
